# EUROPÄISCHE PATENTSCHRIFT

(11) **EP 3 438 618 B1**
(45) Veröffentlichungstag und Bekanntmachung des Hinweises auf die Patenterteilung: **18.08.2021**
(21) Anmeldenummer: 18170368.7
(22) Anmeldetag: 02.05.2018
(51) Int. Cl.: G01D 5/38

(54) **ABTASTPLATTE FÜR EINE OPTISCHE POSITIONSMESSEINRICHTUNG**
SCANNER DISK FOR AN OPTICAL POSITION MEASURING DEVICE
PLAQUE DE BALAYAGE POUR UN DISPOSITIF DE MESURE DE POSITION OPTIQUE

(30) Priorität: 02.08.2017 DE 102017213330
(43) Veröffentlichungstag der Anmeldung: 06.02.2019
(73) Patentinhaber: Dr. Johannes Heidenhain GmbH, 83301 Traunreut (DE)
(72) Erfinder: FUNK, Stefan, 83278 Traunstein (DE); HOFMANN, Andreas, 83093 Bad Endorf (DE); SPECKBACHER, Peter, 84558 Kirchweidach (DE)

(56) Entgegenhaltungen:
- EP-A1- 3 150 970
- DE-A1-102005 020 944
- US-A1- 2009 268 295

## Beschreibung

### GEBIET DER TECHNIK

Die vorliegende Erfindung betrifft eine Abtastplatte für eine optische Positionsmesseinrichtung, bei der ein Abtastkopf und ein Maßstab relativ zueinander bewegt werden, wobei im Abtastkopf elektrische Signale entsprechend der Position des Abtastkopfes relativ zum Maßstab erzeugt werden. Solche Abtastplatten sind neben einer Lichtquelle und einem Detektor wichtige, multifunktionale Bauteile im Abtastkopf der Positionsmesseinrichtung.

### STAND DER TECHNIK

Aus der EP 2450673 B1 ist eine optische Positionsmesseinrichtung bekannt, die auf der Abtastung eines Maßstabes mittels Licht beruht. Der Maßstab trägt ein sehr genau gefertigtes optisches Gitter, das als Positionsreferenz dient und von einem Abtastkopf abgetastet wird. Hierzu wird das Licht einer Lichtquelle im Abtastkopf durch eine Abtastplatte auf einen Maßstab geleitet, von dort zurück zum Abtastkopf reflektiert und in einem oder mehreren Detektoren detektiert. Durch Auswertung der Sensorsignale werden hochgenaue Positionswerte ermittelt, die die zu messende Verschiebung zwischen dem Abtastkopf und dem Maßstab angeben. Sowohl auf dem Maßstab als auch auf der Abtastplatte sind Gitter angeordnet, die das Licht in verschiedene Beugungsordnungen aufspalten oder wieder vereinigen und zur Interferenz bringen. Die Abtastplatte weist daher sowohl auf ihrer Ober- als auch auf ihrer Unterseite unterschiedliche Funktionsflächen auf, die z.B. als Reflektor, Beugungsgitter und Fenster für Lichtstrahlen wirken. Für funktionslose Bereiche der Abtastplatte sind Beschichtungen mit Antireflexschichten üblich, um störende Lichtreflexe zu unterdrücken, die ungewollt einen Detektor erreichen und dabei die Positionsmessung verfälschen könnten.

Die US 2009/0268295 A1 beschäftigt sich mit transmittierenden Beugungsgittern und der Auswahl geeigneter Gitterparameter wie dem Steg-Lücke-Verhältnis oder dem Flankenwinkel der Gitterlinien. Die Stege der Beugungsgitter tragen Antireflexschichten.

Die EP 3150970 A1 beschäftigt sich mit einem Schichtsystem für die der Lichtquelle zugewandten bzw. der dem Maßstab abgewandten Seite einer Abtastplatte, die neben Gittern auch Spiegel und Antireflexschichten aufweist. Demgegenüber betrifft die vorliegende Anmeldung die Ausgestaltung der dem Maßstab zugewandten Seite einer Abtastplatte, die ein tiefgeätztes Beugungsgitter und Fenster für Lichtstrahlen aufweist, sowie funktionslose Bereiche.

### ZUSAMMENFASSUNG DER ERFINDUNG

Es ist Aufgabe der Erfindung, Abtastplatten für optische Positionsmesseinrichtung weiter zu optimieren, indem störende Reflektionen noch besser unterdrückt werden.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird eine Abtastplatte für eine optische Positionsmesseinrichtung offenbart, die ein Substrat mit einer in Transmission betriebenen Oberfläche mit verschiedenen Funktionsbereichen aufweist. Die Oberfläche weist dabei mindestens einen Bereich mit einem aus Lücken und Stegen gebildeten Gitter auf, wobei die Lücken im Substrat ausgebildet sind. Die Oberfläche weist eine Antireflexschicht auf, die im Bereich der Lücken unterbrochen ist.

Die Antireflexschicht umfasst eine auf dem transparenten Substrat mittels Dünnschichttechnik aufgebrachte, nur wenige Nanometer dicke Schicht aus einem Material mit geringem Absorptionskoeffizient und hohem realen Brechungsindex (bei einer Wellenlänge von ca. 1µm) wie z.B. Silizium oder Germanium. So verursacht diese dünne Schicht bei der Herstellung des Gitters mittels eines Ätzprozesses keinen zusätzlichen Prozessaufwand, da sie beim Ätzen des Substratmaterials zur Herstellung des Gitters durchtrennt wird. Obwohl die Antireflexschicht dann lediglich auf den Stegen des Gitters vorhanden ist, nicht aber in den Lücken, werden störende Rückreflexe im Bereich des Gitters deutlich vermindert.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: eine Draufsicht auf die Abtastplatte,
- Figur 2: einen Schnitt durch die Abtastplatte in einer Seitenansicht, vor und nach dem Ätzen des Gitters,
- Figur 3: die Beugungseffizienz für die Reflexion des Gitters, mit und ohne Antireflexschicht.

### BESCHREIBUNG DER AUSFÜHRUNGSFORMEN

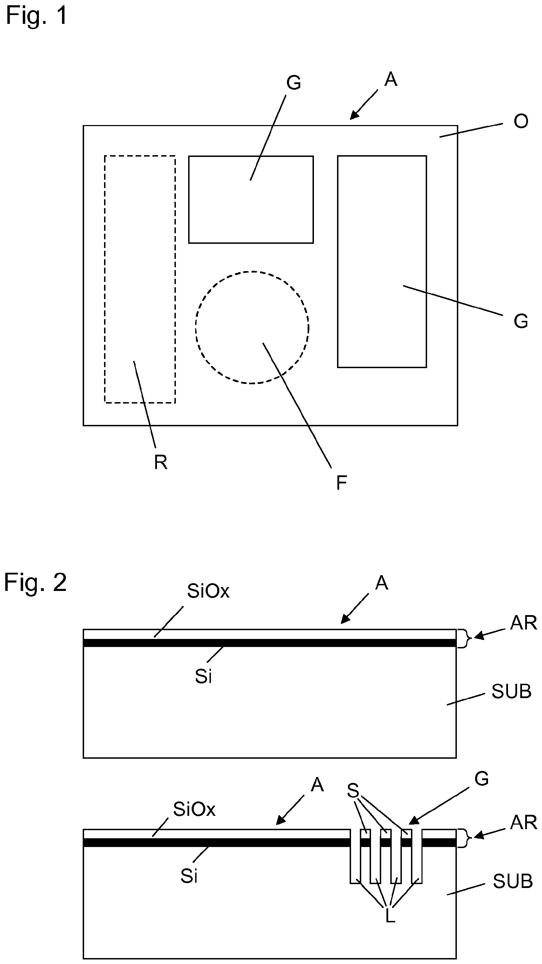

Die Figur 1 zeigt eine Draufsicht auf eine Abtastplatte A eines optischen Positionsmessgerätes. Unterschiedliche Funktionsbereiche G, F, R sind schematisch eingezeichnet. Darunter sind Bereiche mit Gittern G, die das Licht in unterschiedliche Beugungsordnungen aufspalten bzw. verschiedene von einem Maßstab reflektierte Lichtstrahlen vereinigen, um diese zur Interferenz zu bringen. Auch zum Lenken und Fokussieren des Lichts innerhalb eines Positionsmessgerätes können solche Gitter G dienen. Auf die Struktur der Gitter G wird weiter unten noch eingegangen.

Ein weiterer Funktionsbereich ist das Fenster F, durch das Lichtstrahlen möglichst ungehindert und vollständig durchtreten sollen. Eine spezielle Umrandung weisen solche Fenster F nicht unbedingt auf, sie sind vielmehr durch die Position der gezielt durch diesen Bereich gelenkten Lichtstrahlen definiert. Eine Umrandung kann aber beispielsweise bei der Qualitätsprüfung helfen, die Fenster auf Defektfreiheit zu prüfen.

Reflexionsbereiche R sind solche Bereiche, in denen unerwünschtes Streulicht auftrifft und möglicherweise von der Oberfläche O der Abtastplatte A reflektiert wird. Auch diese Reflexionsbereiche R sind nicht in irgendeiner Form als Struktur erkennbar, sondern sind durch das Auftreffen von Streulicht definiert. Der Reflexionsbereich R ist daher wie das Fenster F mit gestrichelten Linien dargestellt.

Im Bereich der Reflexionsbereiche R waren bereits bisher Antireflexschichten üblich, um störende Reflexe von Streulicht zu minimieren. Das Anbringen solcher Antireflexschichten, die die Bereiche mit Gittern G oder Fenstern F aussparen, erforderte jedoch spezielle Prozessschritte, wie beispielsweise einen zusätzlichen Lithographieschritt und einen Ätzschritt, um die zunächst vollflächig aufgebrachte Antireflexschicht im Bereich der Gitter G und Fenster F zu entfernen.

Es wird daher vorgeschlagen, die Antireflexschicht auch auf die Bereiche der Gitter G und Fenster F auszudehnen, und dabei eine Antireflexschicht zu verwenden, die ohne separaten Ätzschritt bearbeitet werden kann. Somit können auch im Bereich der Gitter G und Fenster F unerwünschte Reflexionen des Lichtes minimiert werden, zudem wird die Prozessierung solcher Abtastplatten A vereinfacht.

In der Figur 2 ist dargestellt, wie dies bewerkstelligt wird. Die Figur 2 zeigt oben die Abtastplatte A seitlich in einem Schnitt. Man erkennt ein Substrat SUB, auf dem eine dünne Schicht Si aus Silizium aufgebracht ist. Darauf ist eine weitere dünne Schicht SiOx aufgebracht. Bevorzugt besteht diese weitere dünne Schicht SiOx aus Siliziumoxid (Summenformel SiOx) und entspricht dem Material des Substrates SUB oder verhält sich bezüglich seiner optischen Eigenschaften und seiner Ätzbarkeit ähnlich wie das Substrat SUB. Beim Substrat SUB kann es sich z.B. um Quarzglas oder Borofloatglas handeln.

Es ist auch möglich, dass auf einem Glaskeramik-Träger (wie unter dem Handelsnamen ZERODUR erhältlich) eine Siliziumoxid - Schicht aufgebracht ist, auf der dann als Antireflexschicht AR die dünne Schicht Si und die weitere dünne Schicht SiOx aufgebracht sind. Mit Substrat SUB ist im Sinne dieser Anmeldung die Schicht oder der Schichtstapel bezeichnet, auf der die dünne Schicht Si bzw. die Antireflexschicht AR angeordnet ist.

Anstelle von Silizium kann auch ein anderer Halbleiter wie beispielsweise Germanium als dünne Schicht Si verwendet werden. Diese dünne Schicht Si ist so dünn, dass sie die Transmission des Lichts durch die Abtastplatte A nicht wesentlich behindert. Eine Siliziumschicht Si mit einer Dicke im Bereich von 2nm bis 8nm, bevorzugt 4nm bis 6nm ist für diesen Zweck gut geeignet. Dies wurde mit Simulationsrechnungen und experimentell bestätigt, und zwar für Licht einer Wellenlänge von ca. 1µm und für eine Dicke der obersten Schicht SiOx im Bereich von ca. 225nm - 250nm. Geradzahlige Vielfache dieser Bereichsgrenzen für die Dicke sind ebenfalls möglich. Die Reflexion eines solchen Schichtaufbaus liegt für senkrecht einfallendes Licht unterhalb von 0,25%.

Zum Einbringen des Gitters G werden ein Lithographieschritt und ein darauf folgender Ätzschritt eingesetzt. Das Resultat ist in der Figur 2 unten dargestellt. Beim Ätzen des Substratmaterials wird zunächst die oberste Schicht SiOx lokal entfernt und dann auch die dünne Schicht Si, ohne dabei den Ätzprozess zu unterbrechen oder die Ätzchemie zu ändern. Die dünne Schicht Si ist so dünn, dass eine solche Anpassung des Ätzprozesses unnötig ist. Im Folgenden wird so viel vom Substrat SUB entfernt, dass Lücken L und Stege S ein Phasengitter G formen, wobei die Stege S die Antireflexschicht AR aufweisen, die Lücken L nicht. Die Lücken L sind ca. 1µm - 1,5µm tief in das Substrat SUB geätzt. Die Antireflexschicht AR ist im Bereich der Lücken L unterbrochen. Die insgesamt erzielte Reduzierung der Rückreflexe im Bereich des Gitters G beruht also auf einer Reduktion der Rückreflexe auf den Rücken der Stege S.

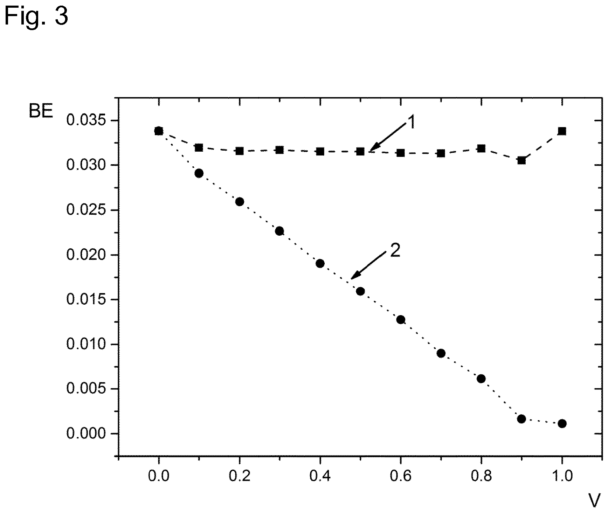

Die Wirkung der Antireflexschicht AR ist in der Figur 3 gezeigt, in Abhängigkeit des Verhältnisses V der Breite der Stege S zur Periode des Gitter G. Dargestellt ist für ein Gitter der Periode 10µm die Beugungseffizienz BE der Rückstreuung, also das Verhältnis der über alle Beugungsordnungen aufsummierten Intensität des reflektierten Lichtes zur eingestrahlten Intensität.

Die Kurve 1 zeigt diese Beugungseffizienz BE ohne Antireflexschicht AR, Kurve 2 die Beugungseffizienz BE mit Antireflexschicht AR im Bereich der Stege S. Man erkennt, dass die Wirkung der Antireflexschicht AR umso besser ist, desto breiter die Stege S sind, bzw. desto Größer das Verhältnis V ist. Für übliche Werte von V im Bereich um 0,5 (vorzugsweise 0,3 - 0,8) ist eine erhebliche Reduzierung der Beugungseffizienz BE zu erkennen.

Das gezeigte Verhalten ändert sich auch für kleinere Gitterperioden bis ungefähr 3 - 4µm nicht. Darunter ergeben sich allerdings vereinzelt Gitterperioden, bei denen die Summe der Intensitäten der rückgestreuten Beugungsordnungen mit Antireflexschicht AR sogar höher liegt als ohne Antireflexschicht AR, so dass die Gitterperiode größer als 3 µm, bevorzugt größer oder gleich 4µm gewählt werden sollte. Alternativ müssen diese kritischen Bereiche der Gitterperioden identifiziert und vermieden werden, dann sind auch kleinere Gitterperioden möglich. Für hochgenaue Positionsmessgeräte wird die Gitterperiode aber maximal 20µm betragen.

Zudem wurde auch untersucht, ob die für optische Positionsmessgeräte besonders wichtige Beugungseffizienz 1. Ordnung in Transmission durch die Antireflexschicht AR auf den Stegen S leidet, denn in Transmission sind möglichst hohe Beugungseffizienzen erwünscht, um viel Messlicht zum Detektor zu bekommen und so ein gutes Signal/Rausch Verhältnis zu erreichen. So ein negativer Effekt der Antireflexschicht AR auf den Stegen S konnte durch entsprechende Simulationen und Experimente ausgeschlossen werden. In einem weiten Bereich für das Verhältnis V ergibt sich keine Beeinflussung dieser Beugungseffizienz. Dies wurde auch für einen weiten Bereich der Gitterperiode von 4µm bis 20µm bestätigt.

Zusammenfassend konnte durch einen erweiterten Bereich mit einer Antireflexschicht AR der negative Effekt störender Reflektionen deutlich vermindert werden, und dank der besonderen Ausgestaltung der Antireflexschicht AR im Bereich der Gitter G sogar eine Vereinfachung des Herstellungsprozesses erreicht werden.

## Patentansprüche

1. Abtastplatte für eine optische Positionsmesseinrichtung, die ein Substrat (SUB) mit einer in Transmission betreibbaren Oberfläche (O) mit verschiedenen Funktionsbereichen (G, F, R) aufweist, wobei die Oberfläche (O) mindestens einen Bereich mit einem aus Lücken (L) und Stegen (S) gebildeten Gitter (G) aufweist, und wobei die Lücken (L) im Substrat (SUB) ausgebildet sind, **dadurch gekennzeichnet, dass** die Oberfläche (O) eine Antireflexschicht (AR) aufweist, die im Bereich der Lücken (L) unterbrochen ist, und dass die Antireflexschicht (AR) eine wenige Nanometer dicke halbleitende Schicht (Si) umfasst.

2. Abtastplatte nach Anspruch 1, **dadurch gekennzeichnet, dass** das Substrat (SUB) eine an die Antireflexschicht (AR) grenzende Siliziumoxid - Schicht umfasst, und dass die Antireflexschicht (AR) eine auf dem Substrat (SUB) angeordnete Siliziumschicht (Si) und eine darauf angeordnete Siliziumoxid - Schicht (SiOx) umfasst.

3. Abtastplatte nach Anspruch 2, **dadurch gekennzeichnet, dass** die Siliziumschicht (Si) eine Dicke in einem Bereich von 2nm bis 8nm, insbesondere 4nm bis 6nm aufweist

4. Abtastplatte nach Anspruch 3, **dadurch gekennzeichnet, dass** die Siliziumoxid-Schicht (SiOx) der Antireflexschicht (AR) eine Dicke im Bereich von 225nm - 250nm aufweist, oder eine Dicke im Bereich geradzahliger Vielfacher dieser Bereichsgrenzen.

5. Abtastplatte nach einem der vorhergehenden Ansprüche, **dadurch gekennzeichnet, dass** das Verhältnis einer Breite der Stege (S) zu einer Periode des Gitters (G) im einem Bereich von 0,3 - 0,8 liegt.

6. Abtastplatte nach einem der vorhergehenden Ansprüche, **dadurch gekennzeichnet, dass** die Periode des Gitters (G) größer als 3µm, bevorzugt größer oder gleich 4µm ist.

7. Abtastplatte nach einem der vorhergehenden Ansprüche, **dadurch gekennzeichnet, dass** die Lücken (L) durch die Antireflexschicht (AR) in das Substrat (SUB) geätzt sind.

8. Optische Positionsmesseinrichtung mit einem Abtastkopf umfassend eine Lichtquelle und eine Abtastplatte, wobei das Licht der Lichtquelle durch die Abtastplatte auf einen Maßstab fällt und von dort durch die Abtastplatte (A) zurück in den Abtastkopf gelangt und dort von Detektoren in elektrische Signale umgewandelt wird, wobei die Abtastplatte (A) nach einem der vorhergehenden Ansprüche ausgebildet ist.

## Claims

1. Scanning reticle for an optical position measurement device, having a substrate (SUB) with a surface (O) that is operable in transmission and that has different functional regions (G, F, R), wherein the surface (O) has at least one region having a grating (G) formed from gaps (L) and ribs (S), and wherein the gaps (L) are formed in the substrate (SUB), **characterized in that** the surface (O) has an antireflective coating (AR) that is interrupted in the region of the gaps (L), and **in that** the antireflective coating (AR) comprises a semiconducting layer (Si) having a thickness of a few nanometres.

2. Scanning reticle according to Claim 1, **characterized in that** the substrate (SUB) comprises a silicon oxide layer adjoining the antireflective layer (AR) and **in that** the antireflective layer (AR) comprises a silicon layer (Si) arranged on the substrate (SUB), and, arranged on the silicon layer, a silicon oxide layer (SiOx).

3. Scanning reticle according to Claim 2, **characterized in that** the silicon layer (SI) has a thickness in a range from 2 nm to 8 nm, in particular from 4 nm to 6 nm.

4. Scanning reticle according to Claim 3, **characterized in that** the silicon oxide layer (SiOx) of the antireflective layer (AR) has a thickness in the range from 225 nm - 250 nm or a thickness in the region of integer multiples of said range limits.

5. Scanning reticle according to one of the preceding claims, **characterized in that** the ratio of a width of the ribs (S) to a period of the grating (G) lies in a range from 0.3 - 0.8.

6. Scanning reticle according to one of the preceding claims, **characterized in that** the period of the grating (G) is greater than 3 µm, preferably greater than or equal to 4 µm.

7. Scanning reticle according to one of the preceding claims, **characterized in that** the gaps (L) are etched through the antireflective layer (AR) into the substrate (SUB).

8. Optical position measurement device with a scanning head, comprising a light source and a scanning reticle, wherein the light from the light source falls through the scanning reticle onto a scale, passes from there through the scanning reticle (A) back into the scanning head and is converted there into electrical signals by detectors, wherein the scanning reticle (A) is embodied according to one of the preceding claims.

## Revendications

1. Plaque de balayage destinée à un dispositif de mesure de position optique qui comporte un substrat (SUB) pourvu d'une surface (O) qui peut fonctionner en transmission et qui est pourvue de différentes régions fonctionnelles (G, F, R), la surface (O) comportant au moins une région pourvue d'une grille (G) formée d'interstices (L) et de nervures (S), et les interstices (L) étant ménagés dans le substrat (SUB), **caractérisée en ce que** la surface (O) comporte une couche antireflet (AR) qui est interrompue dans la région des interstices (L), et **en ce que** la couche antireflet (AR) comprend une couche semi-conductrice (Si) de quelques nanomètres d'épaisseur.

2. Plaque de balayage selon la revendication 1, **caractérisée en ce que** le substrat (SUB) comprend une couche d'oxyde de silicium adjacente à la couche antireflet (AR), et **en ce que** la couche antireflet (AR) comprend une couche de silicium (Si) disposée sur le substrat (SUB) et une couche d'oxyde de silicium (SiOx) disposée dessus.

3. Plaque de balayage selon la revendication 2, **caractérisée en ce que** la couche de silicium (Si) a une épaisseur dans une gamme allant de 2 nm à 8 nm, notamment de 4 nm à 6 nm.

4. Plaque de balayage selon la revendication 3, **caractérisée en ce que** la couche d'oxyde de silicium (SiOx) de la couche antireflet (AR) a une épaisseur dans la gamme allant de 225 nm à 250 nm, ou une épaisseur dans la gamme de multiples pairs de ces limites de gamme.

5. Plaque de balayage selon l'une des revendications précédentes, **caractérisée en ce que** le rapport d'une largeur des nervures (S) à une période du réseau (G) est dans une gamme allant de 0,3 à 0,8.

6. Plaque de balayage selon l'une des revendications précédentes, **caractérisée en ce que** la période du réseau (G) est supérieure à 3 µm, de préférence supérieure ou égale à 4 µm.

7. Plaque de balayage selon l'une des revendications précédentes, **caractérisée en ce que** les interstices (L) sont gravés chimiquement dans le substrat (SUB) à travers la couche antireflet (AR).

8. Dispositif de mesure de position optique pourvue d'une tête de balayage comprenant une source de lumière et une plaque de balayage, la lumière de la source de lumière étant incidente à une échelle à travers la plaque de balayage puis retournant, à travers la plaque de balayage (A), dans la tête de balayage où elle est convertie en signaux électriques par des détecteurs, la plaque de balayage (A) étant conçue selon l'une des revendications précédentes.
